# EUROPEAN PATENT SPECIFICATION

(11) **EP 0 881 818 B1**
(45) Date of publication and mention of the grant of the patent: **20.12.2006**
(21) Application number: 98304284.7
(22) Date of filing: 29.05.1998
(51) Int. Cl.: H04N 1/047

(54) **Vertical alignment correction**
Korrektur des Vertikalabgleichs
Correction d'alignement vertical

(30) Priority: 29.05.1997 KR 9721520
(43) Date of publication of application: 02.12.1998
(73) Proprietor: SAMSUNG ELECTRONICS CO., LTD., Suwon City, Kyungki-do (KR)
(72) Inventor: Lee, Hyun-jun, Yongin-si, Kyungki-do (KR)
(74) Representative: Boakes, Jason Carrington

(56) References cited:
- EP-A- 0 465 213
- EP-A- 0 622 230
- US-A- 4 578 577
- US-A- 4 639 789
- US-A- 5 012 354
- US-A- 5 115 478

## Description

The present invention relates to a vertical alignment correction method for use in a scanner or a multifunctional machine having a scanning function and a scanning apparatus, such as a scanner or a multifunctional machine having a scanning function, capable of vertical alignment correction.

Recently along with the development of electric/electronic manufacturing techniques and their control methods, multifunctional machines with complex functions have been becoming popular. For instance, computers utilised for such simple works as uncomplicated arithmetic operation, word processing and data bases are expanding their functions to include TV, playing games, or communication devices such as multimedia computers. With multimedia computers, peripheral devices to such computers, for example printers, are also increasing their range of functions and becoming more complex.

An example of a prior art multifunctional machine having printing and scanning functions is explained below referring to the attached drawings.

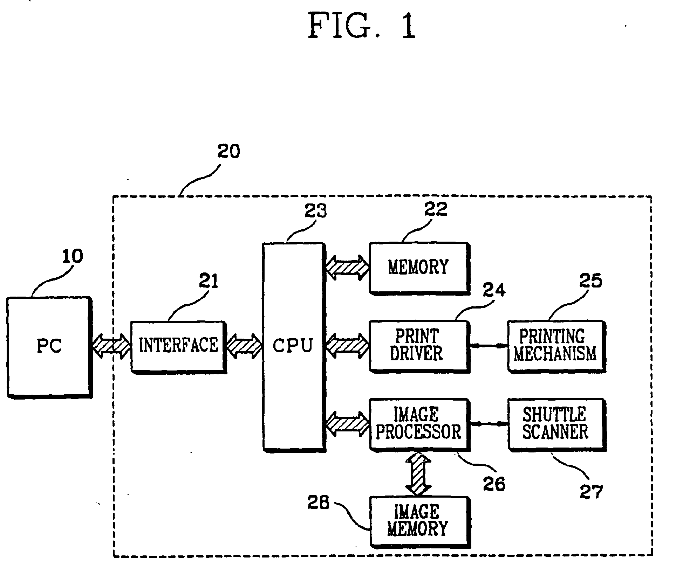

The multifunctional machine having printing/scanning functions shown in FIG. 1 receives or outputs data or control signals externally through interface 21. Print data are applied to CPU 23 from PC 10 through interface 21.

CPU 23, which receives the print data, reads a required control program and data from memory 22, outputting a control signal for printing the print data. The output control signal is accepted in print driver 24. Then, print driver 24 controls a printing mechanism according to the control signal applied so as to print.

In order to scan information contained in a document, a shuttle scanner is used. When the document is scanned with the shuttle scanner, the image data scanned is compensated for in image processor 26 and then stored in image memory 28. The image data stored in image memory 28 is transmitted to PC 10 through interface 21 under the control of CPU 23.

PC 10, which receives the image data via interface 21, processes and stores these through a software application, for the purpose of forming a data base. To print the scanned data base, print data are reproduced and transmitted to multifunctional machine 20.

According to the print data transmitted, the multifunctional machine 20 generates a control signal through CPU 23 so that the scanned image data are printed through print driver 24 and printing mechanism 25.

The shuttle scanner mounted on such conventional multifunctional machine scans information written on a document in one direction or two directions. Especially when faster scanning speed is required, bidirectional scanning is adopted. For A4 size document scanning, the A4 size document is divided into 27 blocks.

In the case of the bidirectional scanning, though the scanning speed is faster, a difference in the scanning distance may be caused because the scanning start point changes with the passage of time due to the mechanical characteristics of the scanner. Because of the difference in the scanning distance, bands and nearby blocks, deviate from each other by as much as the difference occurring due to the different scanning directions, causing a difference in vertical alignment. In order to overcome such a problem, unidirectional scanning is selected despite its slower scanning speed. This unidirectional scanning decreases the scanning efficiency due to the sluggish scanning speed. On the other hand, bidirectional scanning reduces the quality of image scanned.

It is an aim or embodiments of the present invention to at least partly mitigate the above-mentioned problems.

According to a first aspect of the present invention there is provided a vertical alignment correction method for use in scanning apparatus comprising:
scanning in a first direction;
scanning in an opposite direction;
determining a reference distance value in the first direction from a reference mark to an end of a scanning path;
determining a second distance value in the second direction from the end of the scanning path to the reference mark;
comparing the reference distance value and the second distance value;
determining a difference value corresponding to a difference between the reference distance value and the second distance value; and
adjusting a starting point for scanning in the second direction responsive to said difference value, said a starting point comprising a point from which scanning in a second direction will start, wherein, in a subsequent scan, a distance value in each direction is substantially equal.

According to a second aspect of the present invention there is provided a scanning apparatus comprising:
means for scanning in a first direction and an opposite direction;
means for determining a reference distance value in the first direction from a reference mark to an end of a scanning path;
means for determining a second distance value in the second direction from the end of the scanning path to the reference mark;
means for comparing the reference distance value and the second distance value;
means for determining a difference value corresponding to a difference between the reference distance value and the second distance value; and
means for adjusting a starting point for scanning in the second direction responsive to said difference value, said a starting point comprising a point from which scanning in a second direction will start, wherein, in a subsequent scan, a distance value in each direction is substantially equal.

Preferably, the position of the end of the scanning path is adjusted.

Preferably, the reference mark is formed on a white pad.

Preferably, reference mark is a vertical reference line.

Preferably, the reference mark is positioned to the side of a main scanning region.

Preferably, a control signal for correcting a difference in scanning distance difference, if it occurs, is outputted to a motor controller for controlling the carriage return motor.

Preferably, the apparatus comprises means for deciding whether the reference distance value and the second motor step number are substantially the same; means for deciding whether the result of subtracting the second motor step number from the reference value is positive or negative if they are not the same in step (i); means for adjusting the length of the scanning path by obtaining an opposite scanning start point K2 for scanning in the other direction where the value of the subtraction result is added to the opposite scanning start point K1, if the subtraction number is positive in the step (j); and means for adjusting the length of the scanning path by obtaining an opposite scanning start point K2 for scanning in the other direction where the subtraction result is deducted from the opposite scanning start point K1, if the subtraction number is negative in the step (j).

Preferably, the method comprises the substeps of: (a) starting scanning the first block of a document; (b) checking for the detection of the reference mark along a scanning path of the first block of the document; and (c) deciding whether the reference mark is present or absent.

Preferably, the method comprises step of returning to the step (b) to find the vertical reference line if it is not found in the step (c).

Preferably, the method comprises the substeps of: (d) counting rotations of a carriage return motor to determine a first motor step number so as to measure of the distance from the reference mark to the end of a scanning path in one direction; and (e) deciding whether a reference distance value, termed the first motor step number, is obtained in the step (d).

Preferably, the method comprises the step of returning to step (d) in order to scan up to the end of the scanning path if the reference value is not obtained in step (d).

Preferably, the method comprises the substeps of: (f) start scanning from the end of a scanning path to the reference mark in the other direction; (g)counting the rotations of a carriage return motor to determine a second motor step number, that is, the distance from the end of the scanning path to the reference mark in the step (f); and (h) deciding whether the reference mark has been detected so as to be counted in the second motor step number in step(g).

Preferably, the method comprises the step of returning to the step (f) to count up to the reference mark if it is absent in step (g).

Preferably, the method the substeps of: (i) deciding whether the reference distance value and the second motor step number are substantially the same; (j) deciding whether the result of subtracting the second motor step number from the reference value is positive or negative if they are not the same in step (i); (k) adjusting the length of the scanning path by obtaining an opposite scanning start point K2 for scanning in the other direction where the value of the subtraction result is added to the opposite scanning start point, if the subtraction number is positive in step (j); and (l) adjusting the length of the scanning path by obtaining an opposite scanning start point K2 for scanning in the other direction where the subtraction result is deducted from the opposite scanning start point K1, if the subtraction number is negative in the step (j).

Thus, the present invention preferably provides a vertical alignment correction apparatus and method for setting a reference line on a white pad prior to scanning of information written on a document using a scanner in a multifunctional machine, and scanning the document in two directions, using the vertical reference line, to measure the scanning distances in each direction, calculate the difference between the measured distances, and finally correct the scanning distance according to the obtained difference between the distances.

Preferably, the invention provides a vertical alignment correction apparatus comprising: a CPU for reading a vertical alignment correction program stored in a system memory, means for detecting scanning distances using a CR motor's rotation step number, during bidirectional scanning using a vertical reference line, and outputting a control signal for correcting a scanning distance difference if it occurs according to the detection result; a print driver for receiving the correction control signal output by implementing a program for correcting the scanning difference, generated from the CPU, and for outputting a control signal for controlling the scanning distances; and a CR motor whose rotation number is controlled according to the control signal output from the print driver.

The vertical alignment correction method preferably comprises the steps of: (a) scanning and recognising a vertical reference line in the first block of a document; (b) scanning in one direction with the vertical reference line if it is recognised in the step (a), and thus calculating a reference value; ^{©} scanning in the other direction if the reference value is obtained in the step (b), to count a second motor step number; and (d) comparing the reference value and second motor step number obtained respectively in the steps (b) and ^{©}, and if they are not equal, correcting them so that bidirectional scanning distances become the same.

The invention will now be described by reference to the following drawings, by way of example only, in which :
FIG. 1 is a block diagram of the internal circuits of a conventional multifunctional machine;
FIG. 2 is a block diagram of a control circuit for controlling the driving mechanism of a multifunctional machine of the present invention;
FIG. 3 is a configuration diagram of the driving mechanism of the multifunctional machine of the present invention;
FIGS. 4 A and B are a flowchart of a vertical alignment correction method according to the present invention;
FIG. 5 is a state diagram of the mechanism of a shuttle scanner for vertical alignment correction;
FIG. 6 is a state diagram of the concept of the shuttle blocks of an A4 size document; and
FIG. 7 is a state diagram of a method of scanning the shuttle blocks of A4 size document shown in FIG. 6.

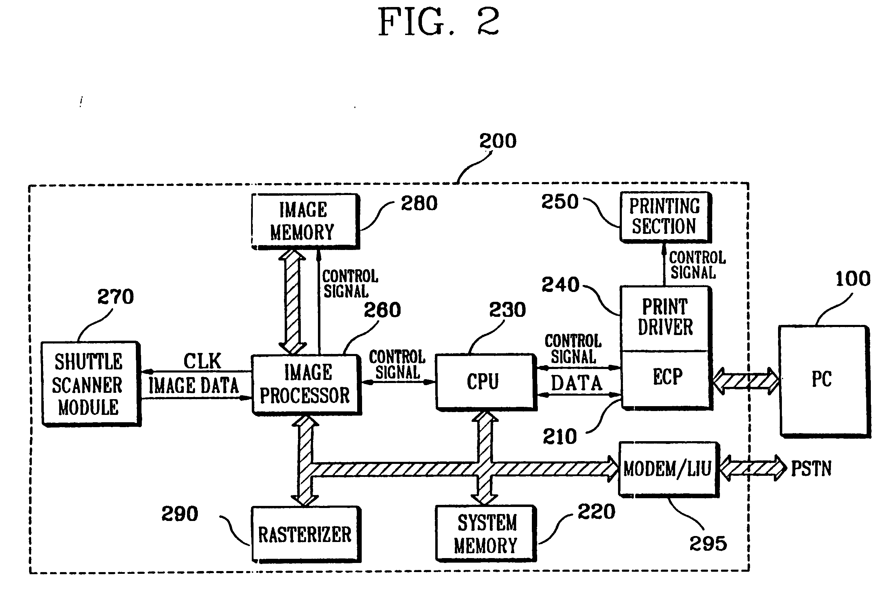

A preferred embodiment of the present invention will be now described with reference to the attached figures 2, 3, and 4.

In FIG. 2, a control circuit of the driving mechanism of the multifunctional machine of the present invention comprises a system memory 220 for storing a control program of a multifunctional machine 200 and a program for controlling the initial set condition data and vertical alignment correction. The control circuit also comprises a CPU 230 for reading the data and program stored in system memory 220 to control the overall operation of multifunctional machine 200, for detecting the scanning distances during bidirectional scanning of information written on a document 200a by counting the rotation number of a carriage return (CR) motor 250e, and finally outputting a control signal for correcting the difference between the scanning distances if necessary according to the detection result.

The circuit also includes a print driver 240 for processing a control signal for correcting output by implementing print data generated from CPU 230 and a program for correcting the scanning distances, and then outputting a control signal for scanning distance. A printing section 250 is equipped with a mechanism for controlling LF motor 250a and CR motor 250e according to the control signal output from print driver 240 to carry the document or print medium 200a and control the movement of print head 250c.

An image processing section 260 receives the scanning control signal output from CPU 230, and then outputs a control signal for scanning the information written on document 200a. A shuttle scanner module 270 scans the information written on document 200a using the control signal output from image processing section 260, or with the control signal for scanning distance output from print driver 240 to control the scanner module 270. An image memory 280 temporarily stores the image data scanned by shuttle scanner module 270 according to the control signal of image processing section 260.

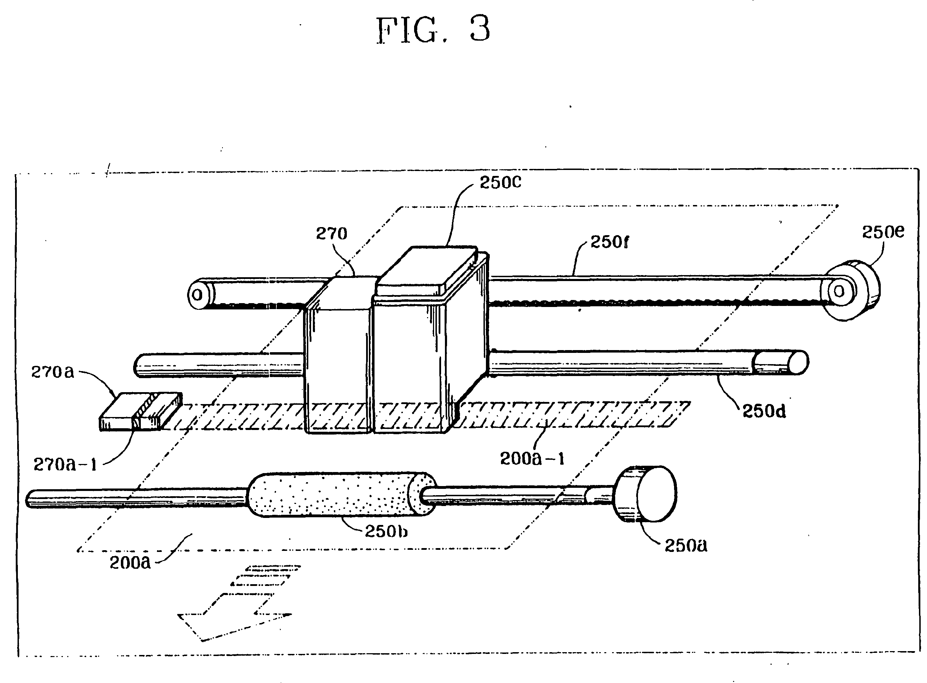

The driving mechanism of the multifunctional machine controlled by the above-explained control circuit will be described below with reference to FIG. 3.

In FIG. 3, the driving mechanism comprises line feed (LF) motor 250a for generating a rotation force for carrying the information-carrying document and print medium 200a. LF roller 250b receives the rotation force of LF motor 250a and carries the document and print medium 200a. A print head 250c sprays ink onto print medium 200a conveyed by LF roller 250b to form an image. A white pad 270a is used as a white reference during scanning and for forming a vertical reference line 270a-1, for use as a reference mark for scanning distance during scanning. Shuttle scanner module 270 is mounted on one side of print head 250c for scanning the information written on document 200a carried by LF roller 250b and the vertical reference line 270a-1 formed on white pad 270a along scanning path 200a-1. Carriage return (CR) motor 250e provides a rotation force that allows print head 250c and shuttle scanner module 270 to move left and right for the purpose of scanning the document or spraying ink to print medium 200a. Time belt 250f transmits the rotation force generated from CR motor 250e. Guide shaft 250d guides print head 250c and shuttle scanner module 270 as these are moved left and right by time belt 250f.

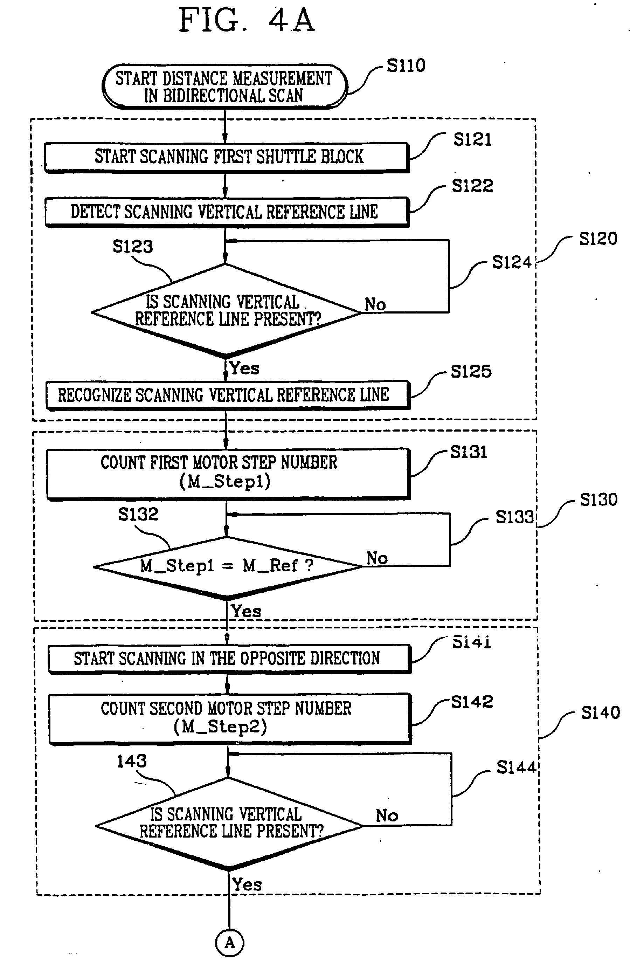

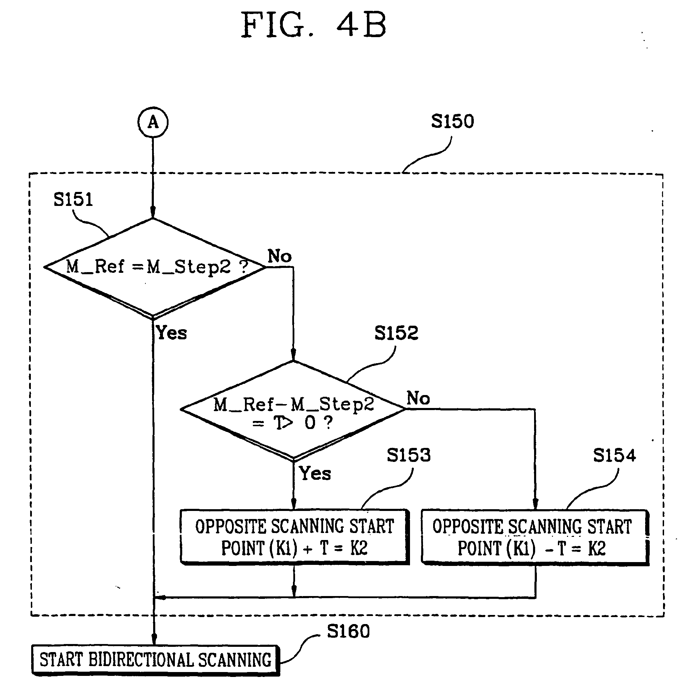

An embodiment of the vertical alignment correction of the present invention carried out by CPU 230 will be explained below with reference to FIGS. 4A and 4B. Here the rotation number of CR motor 250e is counted to detect the scanning distances, and if there occurs a difference between the scanning distances, a scanning distance correction program is implemented to output a correction control signal.

This embodiment comprises the steps of: implementing (S110) a program for correcting scanning distance differences during bidirectional scanning through CPU 230 and starting bidirectional scanning in step (S110); scanning in step (S120) the first block of document 200a and recognising or detecting vertical reference line 270a-1; scanning (S130) in one horizontal direction from vertical reference line 270a-1, following its recognition in step s120, and thus calculating a reference value M_Ref for the distance from line 270a-1; scanning (S140) in the other horizontal direction thus counting the number of motor steps in accordance with the scanning distance to calculate the second motor step number M_Step2 for the distance from the opposite scanning start point K1 point back to the reference line 270a-1; correcting (S150) the bidirectional scanning distances if the reference value M_Ref obtained in step S140 is not the same as the second motor step number M_Step2, so that the distances become equal; and, performing (S160) bidirectional scanning if the distance difference during bidirectional scanning is corrected in step S150.

In this procedure, step S120 of scanning and recognising vertical reference line 270a-1 in the first block of document 200a comprises the substeps of starting (S121) scanning of the first block of document 200a following the start of bidirectional scanning in step S110, checking (S122) for vertical reference line 270a-1 along scanning path 200a-1 of the first block of document 200a once the first block scanning has begun in step S121, deciding (S123) whether a vertical reference line 270a-1 has been located, and returning (S124) to step S122 if there is no vertical reference line 270a-1 in step S123 in order to find it.

The step S130 of calculating a scanning reference value for bidirectional scanning using vertical reference line 270a-1 comprises the substeps of determining (S131) the first motor step number M_Step1 that measures the distance from vertical reference line 270a-1 to the end of scanning path 200a-1 in one direction typically in units of the number of rotations of the carriage return motor (typically this is done by counting the number of rotations from reference line 270a-1 to the end of the scanning path 200a-1), deciding (S132) whether a reference value M_Ref, the motor step number M_Step1 counted in step S131, is calculated, and returning (S133) to step S131 of counting the first motor step number M_Step1 if reference value M_Ref is not obtained, in order to scan up to the end of scanning path 200a-1.

The step S140 of calculating the second motor step number M_Step2 comprises the substeps of starting (S141) scanning the other direction from the end of scanning path 200a-1 to vertical reference line 270a-1, counting (S142) the second motor step number M_Step2 that counts the distance from the end of scanning path 200a-1 to vertical reference line 270a-1, deciding (S143) whether vertical reference line 270a-1 is included in step S142, and returning (S144) to step S143 if there is no vertical reference line 270a-1 in step S143, in order to count up to vertical reference line 270a-1.

The step S150 of correcting the bidirectional scanning distances if they are not equal comprises a first substep of deciding (S151) whether reference value M_Ref and the second motor step number M_Step2 are equal. The next substep is deciding (S152) whether a number T, equal to second motor step number M_Step2 subtracted from reference value M-Ref, is positive or negative if these are not equal. The next substep is adding (S153) the number T at the opposite scanning starting point K1 remote from vertical reference line 270a-1 if the number T is positive in step S152, and thus calculating a different opposite scanning starting point K2, somewhat to the right of starting point K1 and subtracting (S154) the number T from the opposite scanning start point K1 of vertical reference line 270a-1 if the number T is negative, and thus calculating a different opposite scanning start point K2 somewhat to the left of starting point K1.

The present invention having such procedures will be described in more detail with reference to FIGS. 2, 5, 6 and 7.

Multifunctional machine 200 receives print data produced from PC 100 through communication with another PC, or sends image data or processes fax signals. First, the procedure of processing the print data applied from PC 100 will be described.

When print data are produced from PC 100 according to a program, they are applied to CPU 230 via ECP 210 of multifunctional machine 200. Here, ECP 210 is used as a parallel interface module for bidirectional communications.

CPU 230 receives the print data via ECP 210 and processes and applies this to print driver 240. Then, print driver 240 outputs a print head fire/enable control signal, a phase/position control signal for CR motor 250e, a print data handling control signal, and an LF motor control signal. The control signals output from print driver 240 are accepted in printing section 250.

Printing section 250 carries print medium 200a by means of LF roller 250b controlled by LF motor 250a according to the control signal applied. When print medium 200a is carried, printing starts according to the data applied through print head 250c controlled and moved by CR motor 250e and time belt 250f. Here, print head 250c is guided by guide shaft 250d and moves across print medium 200a so that ink is prayed according to the print control signal to form an image.

A demodulated digital signal, such as a fax or modem signal, which is applied to modem/LIU 295 via PSTN from the external devices through a PSTN network, is outputted here and is matrix-transformed by rasterizer 290 under the control of CPU 230. The matrix-transformed signal is sent to print driver 250 for printing, or to PC 100 via ECP 210 for storage.

During such operation, if a user intends to scan information-containing document 200a using multifunctional machine 200, the document is conveyed by LF motor 250a and LF roller 250b so that it is mounted on one side of print head 250c and carried to the initial scanning position of shuttle scanner module 270 which uses guide shaft 250d as its horizontal movement axis. Then, the document is scanned to read the information written upon it.

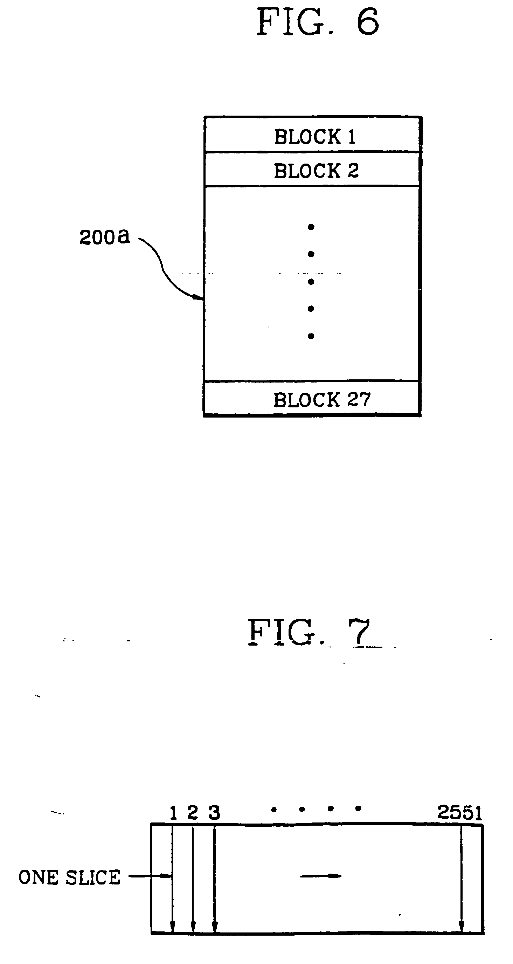

According to the document scanning method of the invention, the document 200a is divided into 27 blocks, as in FIG. 6, if it is A4 size. A charge couple device (CCD) serves as shuttle scanner module 270 and has 128 dots. In scanning the respective blocks 1-27, each block is divided into 2,551 slices, as shown in FIG. 7. Each of the vertical arrows indicates one slice.

The image data scanned by shuttle scanner module 270 go through shading, Gamma correction, Dot per inch (DPI) transformation, edge emphasis, and error diffusion. The corrected image data are matrix-transformed by rasterizer 290 and temporarily stored in image memory 280.

Bidirectional scanning is adopted to increase the scanning speed because the scanning time is elongated for those operations. However, bidirectional scanning may cause a difference in scanning distances due to mechanical characteristics. To correct the scanning distance difference so caused, the scanning distance is measured during bidirectional scanning in step S110.

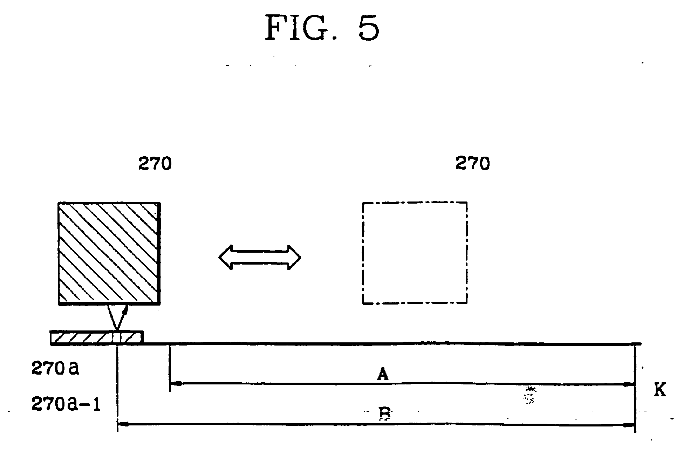

According to the bidirectional scanning of the invention, the distance from end K of the scanning area to vertical reference line 270a-1 formed on white pad 270a is scanned along scanning path 200a-1 of document 200a, as in FIG. 5. Scanning distance A is the actual scanning distance of shuttle scanner module 270, and scanning distance B represents the distance between vertical reference line 270a-1 and the end K of scanning area.

When the bidirectional scanning starts as in FIG. 5, the first block of document 200a is scanned in step S121. When this happens, shuttle scanner module 270 detects vertical reference line 270a-1 along scanning path 200a-1 of the first block in step S122. In other words, the module finds the position of vertical reference line 270a-1 formed on white pad 270a.

When the vertical reference line is detected by shuttle scanner module 270, it is decided in step S123 whether there is a vertical reference line 270a-1 formed on white pad 270 at the scanning position. If no vertical reference line is detected, the step S124 is performed continuously to find vertical reference line 270a-1.

If vertical reference line 270a-1 is detected as a result, the distance starting from vertical reference line 270a-1 to the end K of scanning path 200a-1 is measured in one direction. The shuttle scanner module moves from vertical reference line 270a-1 to the end K of scanning path 200a-1 by means of the rotation force of CR motor 250e.

The amount of rotation of CR motor 250e equals the distance of shuttle scanner module 270 so that the first motor step number M_Step1, the number of rotations of CR motor 250e, is counted. Here, the counting of the first motor step number M_Step1 is carried out by CPU 230.

In step S132 it is decided whether the count value of the first motor step number M_Step1 has reached the end K of the scanning area, indicating that the first motor step number M_Step1 and a reference value M_Ref are equal. If the first motor step number M_Step1 and reference M-Ref are not equal, step S133 is performed to wait until shuttle scanner module 270 moves to the end K of scanning path 200a-1.

Conversely, if the first motor step number M_Step1 and reference value M_Ref are equal, scanning starts in step S141 in the opposite direction from the end K of scanning path 200a-1 to vertical reference line 270a-1. In this situation, the distance from the end K of scanning path 200a-1 to vertical reference line 270a-1 is counted in step S142. This means that the second motor step number M-Step2 is counted in CPU 230, with the number of rotations of CR motor 250e rotating in the opposite direction.

It is decided in step S143 whether vertical reference line 270a-1 is detected or not during the counting of second motor step number M_Step2. If not, step S144 is carried out continuously to perform scanning in the opposite direction until vertical reference line 270a-1 formed on white pad 270a is detected indicating the shuttle scanner has reached the reference line.

If vertical reference line 270a-1 is detected during scanning, it is determined in step S151 whether reference value M_Ref and second motor step number M_Step2 are equal. That is, in this step it is decided whether the movement distance of shuttle scanner module 270 from the initial vertical reference line 270a-1 to the end K of scanning path 200a-1 and the opposite movement distance from the end K of scanning path 200a-1 to vertical reference line 270a-1 are the same.

If reference value M_Ref and second motor step number M_Step2 are equal according to the decided result, shuttle scanner module 270 performs bidirectional scanning without correction in step S160. Conversely, if not, it is determined in step S152 whether the number T, which is the second motor step number M_Step2 subtracted from reference value M_Ref, is positive or not. In other words, it is decided whether the number T, which is reference M_Ref, the movement distance in the initial scanning direction, minus the second motor step number M_Step2, the movement distance in the opposite direction to that of the reference value, is positive (M_Ref-M_Step2=T>0).

If the number T is positive, the opposite scanning start point K2 including the number T is calculated in step S153. The second motor step number M_Step2 is smaller than the reference value because the difference between them is positive. This indicates that the movement distance in scanning in the opposite direction is shorter than that in the initial printing direction. Therefore, the correction is performed in step S160 with the opposite scanning start point K2 obtained by adding the number T to the opposite scanning start point K1, the second motor step number M_Step2. Thus, start point K2 at the end of block 200a-1 is now to the right of start point K1. Thus, in the subsequent scan, the carriage return motor is rotated for longer, though the physical difference travelled in the scan is the same.

If the number T is negative, the opposite scanning start point K2 including the number T is calculated in step S154. The second motor step number M_Step2 is greater than the reference value because the difference between them is negative. This indicates that the movement distance in scanning in the opposite direction is longer than that in the initial printing direction. Therefore, the correction is performed in step S160 with the opposite scanning start point K2 obtained by subtracting the number T from the opposite scanning start point K1, the second motor step number M_Step2. Thus, K2 is to the left of K1 and the next scan will be corrected so as to scan the same actual distance vis-à-vis the vertical reference line as in M-Ref.

The procedures are controlled and carried out by CPU 230, and the result is stored in system memory 220 so that it is applied in the further actual bidirectional scanning.

As described above, the present invention previously measures the difference in scanning prior to bidirectional scanning in a multifunctional machine, and compensates for the difference in the actual scanning to adjust vertical alignment. For this reason, the present invention is able to increase the scanning speed without image quality decreasing. Further, the vertical alignment is maintained through automatic correction performed prior to every bidirectional scanning, always keeping the optimal status during scanning.

## Claims

1. A vertical alignment correction method for use in a scanning apparatus comprises:
scanning in a first direction;
scanning in an opposite direction;
determining a reference distance value in the first direction from a reference mark to an end of a scanning path;
determining a second distance value in the second direction from the end of the scanning path to the reference mark;
comparing the reference distance value and the second distance value;
determining a difference value corresponding to a difference between the reference distance value and the second distance value; and
adjusting a starting point for scanning in the second direction responsive to said difference value, said starting point comprising a point from which scanning in a second direction will start, wherein, in a subsequent scan, a distance value in each direction is substantially equal.

2. A method according to any previous claims in which the position of the start point for scanning in the opposite direction is adjusted for at least the next bidirectional scan.

3. A method according to claim 2, in which the start point for scanning in the opposite direction is adjusted for each subsequent bidirectional scan on the basis of the distance value determined in each direction in the preceding bidirectional scan.

4. A method according to claim 2, in which the start point for scanning in the opposite direction is adjusted for one or more subsequent bidirectional scans on the basis of the distance values determined in the first bidirectional scan.

5. A method according to any preceding claim, in which a control signal for correcting a difference in scanning distance difference, if it occurs, is outputted to a motor controller for controlling the carriage return motor.

6. A Method according to any of claims 1 to 5, comprising the substeps of:
(a) starting scanning the first block of a document;
(b) checking for the detection of the reference mark along a scanning path of the first block of the document; and
(c) deciding whether the reference mark is present or absent.

7. A method according to claim 6 further comprising the step of returning to the step (b) to find the vertical reference line if it is not found in the step (c)

8. A method as according to any preceding claim comprises the substeps of:
(d) counting rotations of a carriage return motor to determine a first motor step number so as to measure a distance from the reference mark to the end of a scanning path in one direction; and
(e) deciding whether the reference distance value is equal to the first motor step number, obtained in the step (d).

9. A method according to claim 8, further comprising the step of returning to step (d) in order to scan up to the end of the scanning path if the reference distance value is not equalled in step (e).

10. A method according to any preceding claim comprising the substeps of:
(f) start scanning from the starting point for scanning in the opposite direction to the reference mark in the opposite direction;
(g) counting the rotations of a carriage return motor to determine a second motor step number, that is, the distance from the starting point for scanning in the opposite direction to the reference mark in the step (f); and
(h) deciding whether the reference mark has been detected so as to be counted in the second motor step number in step(g).

11. A method according to claim 10, further comprising the step of returning to the step (f) to count up to the reference mark if it is absent in step (g).

12. A method according to any preceding claim comprising the substeps of:
(i) deciding whether the reference distance value and the second motor step number are substantially the same;
(j) deciding whether the result of subtracting the second motor step number from the reference distance value is positive or negative if they are not the same in step (i);
(k) adjusting the length of the scanning path by obtaining a start point K2 for scanning in the opposite direction where the value of the subtraction result is added to the start point for scanning in the opposite direction, if the subtraction number is positive in step (j); and
(l) adjusting the length of the scanning path by obtaining a start point K2 for scanning in the opposite direction where the subtraction result is deducted from the start point K1 for scanning in the opposite direction, if the subtraction number is negative in the step (j).

13. A scanning apparatus comprising:
means for scanning in a first direction and an opposite direction;
moans for determining a reference distance value in the first direction from a reference mark to an end of a scanning path;
means for determining a Second distance value in the second direction from the end of the scanning path to the reference mark;
means for comparing the reference distance value and the second distance value;
means for determining a difference value corresponding to a difference between the reference distance value and the second distance value; and
means for adjusting a starting point for scanning in the second direction responsive to said difference value, said starting point comprising a point from which scanning in a second direction will start, wherein, in a subsequent scan, a distance value in each direction is substantially equal.

14. An apparatus according to claim 13 in which the reference mark is formed on a white pad.

15. An apparatus according to any of claim 13 or 14 in which the reference mark is a vertical reference line

16. An apparatus according to any of claims 13 to 15 in which the reference mark is positioned to the side of a main scanning region.

17. Apparatus according to any of claims 13 to 16 comprising:
means for deciding whether the reference distance value and the second motor step number are substantially the same;

## Patentansprüche

1. Ein Korrekturverfahren für die vertikale Ausrichtung zur Verwendung in einer Abtastvorrichtung, umfassend:
Abtasten in einer ersten Richtung;
Abtasten in einer entgegengesetzten Richtung;
Bestimmen eines Bezugsabstandswerts in der ersten Richtung von einer Bezugsmarke zu einem Ende eines Abtastpfads;
Bestimmen eines zweiten Abstandswerts in der zweiten Richtung vom Ende des Abtastpfads zur Bezugsmarke;
Vergleichen des Bezugsabstandswerts und des zweiten Abstandswerts;
Bestimmen eines Differenzwerts, der einer Differenz zwischen dem Bezugsabstandswert und dem zweiten Abstandswert entspricht; und
Einstellen eines Ausgangspunkts zum Abtasten in der zweiten Richtung als Reaktion auf den genannten Differenzwert, wobei der genannte Ausgangspunkt einen Punkt umfasst, von dem das Abtasten in einer zweiten Richtung ausgeht, wobei in einem anschließenden Abtastvorgang ein Abstandswert in jeder Richtung im Wesentlichen gleich ist.

2. Ein Verfahren nach beliebigen der vorangehenden Ansprüche, wobei die Position des Ausgangspunkts zum Abtasten in der entgegengesetzten Richtung für mindestens den nächsten bidirektionalen Abtastvorgang eingestellt wird.

3. Ein Verfahren nach Anspruch 2, wobei der Ausgangspunkt zum Abtasten in der entgegengesetzten Richtung für jeden anschließenden bidirektionalen Abtastvorgang auf der Basis des in jeder Richtung im vorhergehenden bidirektionalen Abtastvorgang bestimmten Abstandswerts eingestellt wird.

4. Ein Verfahren nach Anspruch 2, wobei der Ausgangspunkt zum Abtasten in der entgegengesetzten Richtung für einen oder mehrere anschließende bidirektionale Abtastvorgänge auf der Basis der im ersten bidirektionalen Abtastvorgang bestimmten Abstandswerte eingesellt wird.

5. Ein Verfahren nach einem der vorangehenden Ansprüche, wobei ein Steuersignal zum Korrigieren einer Differenz in der Abtastabstandsdifferenz, sofern sie auftritt, an ein Motorsteuergerät ausgegeben wird, um den Wagenrücklaufmotor zu steuern.

6. Ein Verfahren nach einem der Ansprüche 1 bis 5, das folgende Unterschritte umfasst:
(a) Starten des Abtastens des ersten Blocks eines Dokuments;
(b) Prüfen auf die Erfassung der Bezugsmarke entlang einem Abtastpfad des ersten Blocks des Dokuments; und
(c) Entscheiden, ob die Bezugsmarke vorhanden ist oder fehlt.

7. Ein Verfahren nach Anspruch 6, das weiter den Schritt des Zurückkehrens zum Schritt (b) umfasst, um die vertikale Bezugslinie zu finden, wenn sie im Schritt (c) nicht gefunden wurde.

8. Ein Verfahren nach einem der vorangehenden Ansprüche, das folgende Unterschritte umfasst:
(d) Zählen der Umdrehungen eines Wagenrücklaufmotors, um eine erste Motorschrittzahl zu bestimmen, um einen Abstand von der Bezugsmarke zum Ende eines Abtastpfads in einer Richtung zu messen; und
(e) Entscheiden, ob der Bezugsabstandswert gleich der im Schritt (d) bestimmten ersten Motorschrittzahl ist.

9. Ein Verfahren nach Anspruch 8, das weiter den Schritt des Zurückkehrens zu Schritt (d) umfasst, um bis zum Ende des Abtastpfads abzutasten, wenn dem Bezugsabstandswert in Schritt (e) nicht entsprochen wird.

10. Ein Verfahren nach einem der vorangehenden Ansprüche, das folgende Unterschritte umfasst:
(f) Starten des Abtastens in der entgegengesetzten Richtung vom Ausgangspunkt für das Abtasten in der entgegengesetzten Richtung aus zur Bezugsmarke;
(g) Zählen der Umdrehungen eines Wagenrücklaufmotors, um eine zweite Motorschrittzahl zu bestimmen, das heißt, den Abstand vom Ausgangspunkt für das Abtasten in der entegegengesetzten Richtung zur Bezugsmarke im Schritt (f); und
(h) Entscheiden, ob die Bezugsmarke erfasst wurde, um in der zweiten Motorschrittzahl im Schritt (g) gezählt zu werden.

11. Ein Verfahren nach Anspruch 10, das weiter den Schritt des Zurückkehrens zu Schritt (f) umfasst, um bis zur Bezugsmarke zu zählen, wenn sie im Schritt (g) fehlt.

12. Ein Verfahren nach einem der vorangehenden Ansprüche, das folgende Unterschritte umfasst:
(i) Entscheiden, ob der Bezugsabstandswert und die zweite Motorschrittzahl im Wesentlichen gleich sind;
(j) Entscheiden, ob das Ergebnis des Subtrahierens der zweiten Motorschrittzahl vom Bezugsabstandswert positiv oder negativ ist, wenn sie in Schritt (i) nicht gleich sind;
(k) Einstellen der Länge des Abtastpfads durch Ermitteln eines Ausgangspunkts K2 zum Abtasten in der entgegengesetzten Richtung, wobei zum Abtasten in der entgegengesetzten Richtung der Wert des Subtraktionsergebnisses zum Ausgangspunkt addiert wird, wenn die Subtraktionszahl im Schritt (j) positiv ist; und
(l) Einstellen der Länge des Abtastpfads durch Ermitteln eines Ausgangspunkts K2 zum Abtasten in der entgegengesetzten Richtung, wobei das Subtraktionsergebnis vom Ausgangspunkt K1 zum Abtasten in der entgegengesetzten Richtung abgezogen wird, wenn die Subtraktionszahl im Schritt (j) negativ ist.

13. Eine Abtastvorrichtung, die Folgendes umfasst:
Mittel zum Abtasten in einer ersten Richtung und einer entgegengesetzten Richtung;
Mittel zum Bestimmen eines Bezugsabstandswerts in der ersten Richtung von einer Bezugsmarke zu einem Ende eines Abtastpfads;
Mittel zum Bestimmen eines zweiten Abstandswerts in der zweiten Richtung vom Ende des Abtastpfads zur Bezugsmarke;
Mittel zum Vergleichen des Bezugsabstandswerts und des zweiten Abstandswerts;
Mittel zum Bestimmen eines Differenzwerts, der einer Differenz zwischen dem Bezugsabstandswert und dem zweiten Abstandswert entspricht; und
Mittel zum Einstellen eines Ausgangspunkts zum Abtasten in der zweiten Richtung als Reaktion auf den genannten Differenzwert, wobei der genannte Ausgangspunkt einen Punkt umfasst, von dem das Abtasten in einer zweiten Richtung ausgeht, wobei in einem anschließenden Abtastvorgang ein Abstandswert in jeder Richtung im Wesentlichen gleich ist.

14. Eine Vorrichtung nach Anspruch 13, wobei die Bezugsmarke auf einer weißen Unterlage gebildet ist.

15. Eine Vorrichtung nach einem der Ansprüche 13 und 14, wobei es sich bei der Bezugsmarke um eine vertikale Bezugslinie handelt.

16. Eine Vorrichtung nach einem der Ansprüche 13 bis 15, wobei die Bezugsmarke seitlich von einer Hauptabtastregion positioniert ist.

17. Eine Vorrichtung nach einem der Ansprüche 13 bis 16, umfassend:
Mittel zum Entscheiden, ob der Bezugsabstandswert und die zweite Motorschrittzahl im Wesentlichen gleich sind.

## Revendications

1. Procédé de correction de l'alignement vertical destiné à être utilisé dans un appareil de scannage comprenant les étapes suivantes :
effectuer un scannage dans une première direction ;
effectuer un scannage dans une direction opposée ;
déterminer une valeur de distance de référence dans la première direction, à partir d'un marquage de référence jusqu'à une extrémité d'un trajet de scannage ;
déterminer une deuxième valeur de distance dans la deuxième direction, à partir de l'extrémité du trajet de scannage jusqu'au marquage de référence ;
comparer la valeur de distance de référence et la deuxième valeur de distance ;
déterminer une valeur de différence qui correspond à une différence entre la valeur de distance de référence et la deuxième valeur de distance ; et
régler un point de départ pour le scannage dans la deuxième direction en réaction à ladite valeur de différence, ledit point de départ comprenant un point à partir duquel le scannage va commencer dans une deuxième direction, cas dans lequel, une valeur de distance dans chaque direction sera sensiblement égale lors d'un scannage ultérieur.

2. Procédé, selon l'une quelconque des revendications précédentes, la position du point de départ pour le scannage dans la direction opposée étant réglée pour le prochain balayage bidirectionnel au moins.

3. Procédé, selon la revendication 2, le point de départ pour le scannage dans la direction opposée étant réglé pour chaque balayage bidirectionnel ultérieur sur la base de la valeur de distance qui a été déterminée dans chaque direction lors du balayage bidirectionnel précédent.

4. Procédé, selon la revendication 2, le point de départ pour le scannage dans la direction opposée étant réglé pour un ou plusieurs balayages bidirectionnels ultérieurs sur la base des valeurs de distance qui ont été déterminées lors du premier balayage bidirectionnel.

5. Procédé, selon l'une quelconque des revendications précédentes, un signal de commande pour corriger un écart dans la différence de distance de scannage, si celle-ci se produit, étant acheminé vers un contrôleur de moteur afin de commander le moteur de retour de chariot.

6. Procédé, selon l'une quelconque des revendications 1 à 5, comprenant les sous-étapes consistant à :
(a) démarrer le scannage du premier bloc d'un document ;
(b) vérifier que le marquage de référence peut être détecté le long d'un trajet de scannage du premier bloc du document ; et
(c) décider si le marquage de référence est présent ou absent.

7. Procédé, selon la revendication 6, comprenant en outre l'étape consistant à revenir à l'étape (b) pour trouver la ligne de référence verticale si elle n'a pas été trouvée lors de l'étape (c).

8. Procédé, selon l'une quelconque des revendications précédentes, comprenant les sous-étapes consistant à :
(d) compter les rotations d'un moteur de retour de chariot afin de déterminer un premier nombre de pas de moteur de sorte à mesurer une distance à partir du marquage de référence jusqu'à l'extrémité d'un trajet de scannage dans une direction ; et
(e) décider si la valeur de distance de référence est égale, ou non, au premier nombre de pas de moteur qui a été obtenu lors de l'étape (d).

9. Procédé, selon la revendication 8, comprenant en outre l'étape consistant à revenir à l'étape (d) afin d'effectuer le scannage jusqu'à l'extrémité du trajet de scannage si la valeur de distance de référence n'atteint pas l'égalité lors de l'étape (e).

10. Procédé, selon l'une quelconque des revendications précédentes, comprenant les sous-étapes consistant à :
(f) démarrer le scannage à partir du point de départ pour effectuer le scannage dans la direction opposée au marquage de référence dans la direction opposée ;
(g) compter les rotations d'un moteur de retour de chariot pour déterminer un deuxième nombre de pas de moteur, c'est-à-dire la distance à partir du point de départ pour effectuer le scannage dans la direction opposée jusqu'au marquage de référence lors de l'étape (f) ; et
(h) décider si le marquage de référence a été détecté, ou non, pour que celui-ci soit compté dans le deuxième nombre de pas de moteur lors de l'étape (g).

11. Procédé, selon la revendication 10, comprenant en outre l'étape consistant à revenir à l'étape (f) afin d'effectuer le comptage jusqu'au marquage de référence si celui-ci est absent lors de l'étape (g).

12. Procédé, selon l'une quelconque des revendications précédentes, comprenant les sous-étapes consistant à :
(i) décider si la valeur de distance de référence et le deuxième nombre de pas de moteur sont sensiblement identiques, ou non ;
(j) décider si le résultat, qui est obtenu après avoir soustrait le deuxième nombre de pas de moteur de la valeur de distance de référence, est positif ou négatif s'ils ne sont pas identiques lors de l'étape (i) ;
(k) régler la longueur du trajet de scannage après avoir obtenu un point de départ K2 pour le scannage dans la direction opposée, cas dans lequel la valeur du résultat de la soustraction est ajoutée au point de départ pour le scannage dans la direction opposée, si le chiffre de la soustraction est positif lors de l'étape (j) ; et
(l) régler la longueur du trajet de scannage après avoir obtenu un point de départ K2 pour le scannage dans la direction opposée, cas dans lequel le chiffre de la soustraction est déduit du point de départ K1 pour le scannage dans la direction opposée, si le chiffre de la soustraction est négatif lors de l'étape (j).

13. Appareil de scannage comprenant:
des moyens pour effectuer un scannage dans une première direction et dans une direction opposée ;
des moyens pour déterminer une valeur de distance de référence dans la première direction, à partir d'un marquage de référence jusqu'à une extrémité d'un trajet de scannage ;
des moyens pour déterminer une deuxième valeur de distance dans la deuxième direction, à partir de l'extrémité du trajet de scannage jusqu'au marquage de référence ;
des moyens pour comparer la valeur de distance de référence et la deuxième valeur de distance ;
des moyens pour déterminer une valeur de différence qui correspond à une différence entre la valeur de distance de référence et la deuxième valeur de distance ; et
des moyens pour régler un point de départ pour le scannage dans la deuxième direction en réaction à ladite valeur de différence, ledit point de départ comprenant un point à partir duquel le scannage va commencer dans une deuxième direction, cas dans lequel, une valeur de distance dans chaque direction sera sensiblement égale lors d'un scannage ultérieur.

14. Appareil, selon la revendication 13, le marquage de référence étant formé sur un patin blanc.

15. Appareil, selon l'une quelconque des revendications 13 ou 14, le marquage de référence se présentant sous la forme d'une ligne de référence verticale.

16. Appareil, selon l'une quelconque des revendications 13 à 15, le marquage de référence étant positionné sur le côté d'une région de scannage principale.

17. Appareil, selon l'une quelconque des revendications 13 à 16, comprenant :
des moyens pour décider si la valeur de distance de référence et le deuxième nombre de pas de moteur sont sensiblement identiques, ou non.
